# EUROPÄISCHE PATENTANMELDUNG

(11) **EP 0 847 838 A2**
(43) Veröffentlichungstag der Anmeldung: **17.06.1998**
(21) Anmeldenummer: 97121601.5
(22) Anmeldetag: 08.12.1997
(51) Int. Cl.: B25J 9/16

(54) **Produktscanner**

(30) Priorität: 12.12.1996 DE 19651717
(71) Anmelder: Gerhard Schubert GmbH, D-74564 Crailsheim (DE)
(72) Erfinder: Schubert, Ralf, 74564 Crailsheim (DE)
(74) Vertreter: Alber, Norbert

(57) **Zusammenfassung**

Die Erfindung betrifft eine Vorrichtung sowie ein Verfahren, bei dem die optische Positionsbestimmung soweit als möglich ohne optische Verzerrungen arbeitet, und einfach und kostengünstig herzustellen sowie instandzuhalten ist, möglichst ohne aufwendige Eichvorgänge beim Auswechseln oder Neujustieren von Bauteilen der optischen Positionsbestimmung. Eine derartige Vorrichtung zur optischen Positionsbestimmung mittels lichtempfindlicher Sensoren von Produkten auf einem relativ hierzu bewegten Untergrund, insbesondere einem Transportband kennzeichnet sich dadurch, daß entlang wenigstens einer Abtastlinie, die quer zur Bewegungsrichtung verläuft, wenigstens eine auf das Transportband strahlende Lichtquelle angeordnet ist, und wenigstens eine entlang wenigstens einer der Abtastlinien angeordnete Reihe von lichtempfindlichen Sensoren zur Registrierung des durch die zwischen Lichtquelle und den lichtempfindlichen Sensoren hindurch wandernden Produkte bedingten Lichteffektes angeordnet ist.

## Beschreibung

### I. Anwendungsgebiet

Die Erfindung betrifft eine Vorrichtung sowie ein Verfahren zur optischen Positionsbestimmung von Produkten auf einem Untergrund. Die Positionsbestimmung von Produkten spielt immer dann eine wesentliche Rolle, wenn in der Produktion ungeregelt positionierte Produkte automatisch gehandhabt werden sollen, also insbesondere beim Verpacken von Produkten.

### II. Technischer Hintergrund

Ein typischer Anwendungsfall ist ein Transportband, mittels welchem die hergestellten einzelnen Produkte aus der Produktion zur Verpackungsstation befördert werden, und dort automatisch, z. B. mittels Greifern oder anderer Handhabungsgeräte, ergriffen und in bereitstehende Trays, also Verpackungsbehälter, und die darin meist vorgeformten sogenannten Nester umgesetzt werden müssen.

Die Schwierigkeit besteht darin, daß die Einzelprodukte auf dem Transportband in nicht vorher bestimmbaren Positionen und auch in unterschiedlichen Drehlagen angeordnet sind, während das Ablegen in den Trays nicht nur in der richtigen Position, sondern - je nach Produkt und Ausformung des Trays bzw. der Nester im Tray - auch in einer bestimmten Drehlage erfolgen muß. Zusätzlich wird diese Situation oft dadurch erschwert, daß auf dem Produktband mehrere Sorten von Produkten durcheinander angeliefert, jedoch in einer definierten Anordnung in den einzelnen Trays untergebracht werden müssen.

Zu diesem Zweck war es bisher z. B. aus der EP-A 95 115 548 bekannt, seitlich neben dem laufenden Transportband für die Produkte Trays zu positionieren, die ebenfalls bewegt werden können, und mittels einem oder mehrerer neben dem Transportband stehender Verpackungsroboter, die am freien Ende ihres Armes über einen Greifer oder einen sogenannten Picker, einem Vakuumsauger, verfügen, vom Transportband in die Trays umsetzen zu lassen. Um dem Roboter dabei vorher die Zugriffsposition auf dem Transportband mitteilen zu können, ist in Laufrichtung des Transportbandes vor den Robotern oberhalb des Transportbandes eine Zeilenkamera angeordnet, welche quer zur Transportrichtung verlaufend über die gesamte Breite des Transportbandes entlang einer Abtastlinie feststellt, ob hier gerade ein Produkt unter der Zeilenkamera durchläuft, und ggf. auch in welcher Drehlage. Gekoppelt mit der Information über die Bandgeschwindigkeit und den Abstand zwischen der Abtastlinie und der Roboterposition, kann mittels eines Rechners den stromabwärts arbeitenden Robotern die Zugriffsposition und der zugehörige Zeitpunkt zum Ergreifen eines bestimmten Produktes mitgeteilt werden.

Eine derartige Zeilenkamera hängt bei einem z. B. 1,5 m oder 2 m breiten Transportband ca. 1 m über dem Transportband, was bewirkt, daß die Lichtstrahlen, die den äußersten Rand des Bandes abtasten, bei weitem nicht mehr parallel verlaufen, sondern sich im Okular der Zeilenkamera unter einem Winkel von z. B. 90° treffen.

Dies ergibt optische Verzerrungen und Parallaxen und bewirkt zum einen, daß bei einer Neujustierung der Kamera, erneuten Scharfstellung etc. jedesmal wieder ein Eichvorgang durchgeführt werden muß, also ein Probelauf, währenddessen die Maschine für den Normalbetrieb gesperrt werden muß.

Ein anderer Nachteil liegt darin, daß durch das schräge Auftreffen der Strahlen besonders bei relativ hohen Produkten, die in einem geringen Abstand zueinander auf dem Transportband liegen, die Unterkante eines Produktes durch die benachbarte hochliegende Oberkante eines anderen Produktes für die Kamera verdeckt werden kann, und damit diese nicht als zwei getrennte Produkte erkannt werden können, was zu Fehlfunktionen der Maschine führt.

Weiterhin muß eine derartige Zeilenkamera einen relativ stark auflösenden Sensor, meist einen CCD-Sensor, besitzen, da auch bei einem 2m breiten Transportband eine brauchbar feine Abtastung in einem z. B. 0,5 mm-Raster möglich sein muß, was bedeutet, daß auf dem CCD-Sensor der Kamera in Querrichtung des Bandes 4.000 Bildpunkte auf kleinem Raum vorhanden sein müssen, was auch derartige Zeilenkameras relativ teuer macht.

### III. Darstellung der Erfindung

### a) Technische Aufgabe

Es ist daher die Aufgabe gemäß der Erfindung, eine Vorrichtung sowie ein Verfahren zu schaffen, bei dem die optische Positionsbestimmung soweit als möglich ohne optische Verzerrungen arbeitet, und einfach und kostengünstig herzustellen sowie instandzuhalten ist, möglichst ohne aufwendige Eichvorgänge beim Auswechseln oder Neujustieren von Bauteilen der optischen Positionsbestimmung.

### b) Lösung der Aufgabe

Diese Aufgabe wird durch die kennzeichnenden Merkmale der Ansprüche 1 und 16 gelöst. Vorteilhafte Ausführungsformen ergeben sich aus den Unteransprüchen.

Dadurch, daß die lichtempfindlichen Sensoren nicht in einem kleinen Bereich konzentriert sind, sondern im wesentlichen entlang der gesamten Abtastlinie, also quer über das gesamte Transportband verlaufend, angeordnet sind, verlaufen die auf den lichtempfindlichen Sensoren auftreffenden Lichtstrahlen im wesentlichen parallel zueinander ohne Streuung von einem Okular aus oder auf das Okular zu.

Zu diesem Zweck werden also die lichtempfindlichen Sensoren, also in der Regel CCD-Sensoren, in einen oder mehreren Abtastlinien quer zum Transportband angeordnet, welche die durch das Tageslicht oder eine zusätzlich vorhandene Beleuchtung durch die Produkte erzielten Lichteffekte registrieren, und unterstützt über einen Rechner in Positionsinformationen umsetzen. Innerhalb der leistenförmigen Stabsensoren sind die einzelnen, im wesentlichen punktförmigen CCD-Sensoren in einer Reihe angeordnet. Bei Verwendung von CCD-Kontaktsensoren können als fertige Baugruppen vorteilhafterweise stabförmige CCD-Kontaktsensoren verwendet werden, wie sie bereits in großer Stückzahl zum Einsatz in handelsüblichen Scannern produziert werden und kostengünstig im Handel sind.

Derartige CCD-Kontaktsensoren besitzen beispielsweise eine Länge von etwas mehr als 200 mm und auf diese Länge verteilt 1.728 Pixel, also Einzelsensoren, was eine Auflösung in Querrichtung des Transportbandes von ca. 0,1 mm ergibt. Die Zeilenfrequenz eines solchen Stabsensors beträgt dabei 400 Hz bei einer Pixelfrequenz von ca. 1 MHz und einer Dynamik von 1:100. Dabei ist die Zeilenfrequenz von 400 Hz der entscheidende Wert, da nur mit dieser Zeilenfrequenz das Erkennungsergebnis des gesamten Stabsensors an einen angeschlossenen Rechner weitergegeben und ein neuer Beobachtungsvorgang durchgeführt werden kann. In Relation zur Laufgeschwindigkeit des Bandes ergibt sich dadurch der Abstand in Bewegungsrichtung des Transportbandes, in welchen die Abtastvorgänge durchgeführt werden.

Da es sich jedoch in der Regel bei den Produkten um mehr als 1 cm große Produkte handelt, sind derartige Auflösungen und Wiederholfrequenzen nicht nur ausreichend, sondern erlauben z. B. bei einer unrunden, z. B. viereckigen, Grundfläche des Produktes sogar die Erkennung der Drehlage relativ zur Bewegungsrichtung des Transportbandes.

Vorzugsweise wird die Zusatzbeleuchtung, die zur Verbesserung der durch die Produkte bewirkten Lichteffekte dient, ebenfalls linienförmig und quer zur Bewegungsrichtung des Transportbandes aufgebracht, und dabei vorzugsweise mit parallel und im wesentlichen lotrecht auf das Transportband auftreffenden Lichtstrahlen. Dies ist erzielbar durch leistenförmige Leuchtkörper, unterstützt durch eine entsprechende leistenförmige Linse oder einem hinter dem Leuchtkörper angeordneten entsprechend geformten Reflektor.

Bei Verwendung der handelsüblichen und daher kostengünstigen vorbeschriebenen CCD-Kontaktsensoren müssen diese in sehr enger Anordnung zu dem abzutastenden Gegenstand angeordnet werden. Vorzugsweise werden deshalb die Kontaktsensoren unterhalb des Transportbandes angeordnet, und das Transportband von oben, also von der Gegenseite her, beleuchtet, und das Transportband selbst dabei wenigstens teilweise und wenigstens für die von der Beleuchtungsquelle imitierten Lichtfrequenzen durchlässig gestaltet. Dabei wird vorzugsweise zwischen der Unterseite des Transportbandes und den CCD-Sensoren, also insbesondere den CCD-Kontaktsensoren, eine Glasplatte angeordnet, auf welche die CCD-Sensoren unmittelbar aufgesetzt werden. Dabei ist - außer den direkt vor den einzelnen CCD-Sensoren zum Teil bereits eingebauten Linsen - keine Optik vorhanden, vor allem keine Optik, die in Querrichtung des Transportbandes eine starke Strahlenbündelung vornimmt.

Da die Transportbänder wesentlich breiter sind als die Länge der kostengünstig im Handel befindlichen Stabsensoren, werden die Stabsensoren auf zwei in Bewegungsrichtung beabstandeten Abtastlinien so angeordnet, daß in Querrichtung betrachtet keine Abtastlücke entsteht, also die Stabsensoren der einen Abtastlinie die Lücken zwischen den Stabsensoren der anderen Abtastlinie überdecken.

Da ein erheblicher Preisunterschied zwischen CCD-Sensoren, auch CCD-Kontaktsensoren, besteht, wenn diese nur Hell-Dunkel-Unterschiede registrieren können gegenüber solchen Sensoren, die auch Farbunterscheidungen registrieren, wird in einer bevorzugten Ausführungsform nur mit Hell-Dunkel-Sensoren gearbeitet. wenn zusätzlich Farberkennung, z. B. hinsichtlich der Oberflächengestaltung der einzelnen Produkte, notwendig ist, wird hierfür zusätzlich von der Oberseite des Transportbandes her eine Farberkennung durchgeführt. Dies kann entweder wiederum mittels der zum Stand der Technik beschriebenen Zeilenkamera geschehen, welche in der Mitte über dem Transportband hängt und eine stark fokussierende Optik besitzt. In diesem Fall ist jedoch der dadurch bedingte Nachteil weit weniger gravierend. Zum einen muß eine derartige Zeilenkamera, die lediglich der Farberkennung auf der Oberfläche der Produkte dient, eine wesentlich geringere Auflösung besitzen als für die exakte Positionsbestimmung der Produkte. Zum anderen geht es dabei um die Farbgestaltung der Oberseite der Produkte, so daß also nicht die Abtastung der Unterkanten der Produkte zwecks Lagebestimmung von Interesse ist, welche von benachbarten Oberkanten daneben liegender Produkte verdeckt sein können.

Eine andere Möglichkeit besteht darin, die Farberkennung zu realisieren, indem Flächenkameras mit entsprechenden Farbsensoren oder Grauwertsensoren, die nur ein kleines Erkennungsfeld und damit eine geringe Anzahl von Einzelsensoren und eine geringe Auflösung besitzen, direkt am Arm des einzelnen Roboters, also in der Nähe dessen Greifer, angeordnet sind, und nur in ihrem beschränkten Gesichtsfeld eine Farberkennung durchführen, also bezüglich der Produkte erst dann, wenn der Roboterarm sich dem jeweiligen Produkt, welches ihm vom Rechner aufgrund vorheriger Positionsbestimmung mittels CCD-Sensoren vorgegeben wurde, bereits stark angenähert hat. Hierbei wird jedes Produkt in einer Nahaufnahme individuell analysiert.

Bei Verwendung der handelsüblichen stabförmigen CCD-Kontaktsensoren ist die Auflösung für mehrere cm große Produkte sogar in der Regel zu stark, so daß zur Verringerung der notwendigen Rechenarbeit mehrere benachbart liegende Einzelsensoren für die Positionsbestimmung zu einem einzigen Sensor zusammengefaßt werden.

Eine weitere Möglichkeit liegt darin, Beleuchtung und lichtempfindliche Sensoren auf der gleichen Seite des Transportbandes, also in der Regel auf der Oberseite des Transportbandes, auf welcher die Produkte aufliegen, anzuordnen.

Dadurch ist kein lichtdurchlässiges Transportband notwendig, und die Gefahr von Funktionsstörungen durch ein Verschmutzen des Transportbandes eliminiert. Allerdings sind hierfür Sensoren notwendig, die auch in einem größeren Abstand zur Oberseite der Produkte angeordnet werden können, oder die auf dem Transportband durchlaufenden Produkte müssen eine exakt gleiche Höhe besitzen.

### c) Ausführungsbeispiele

Eine Ausführungsform gemäß der Erfindung ist im folgenden anhand der Figuren beispielhaft näher beschrieben. Es zeigen:
- Fig. 1:: eine Seitenansicht eines entsprechenden Transportbandes,
- Fig. 2:: eine Aufsicht auf das Transportband, und
- Fig. 3:: das Ergebnis beim Durchlauf eines Produktes 2x durch die Abtastlinie 3a.

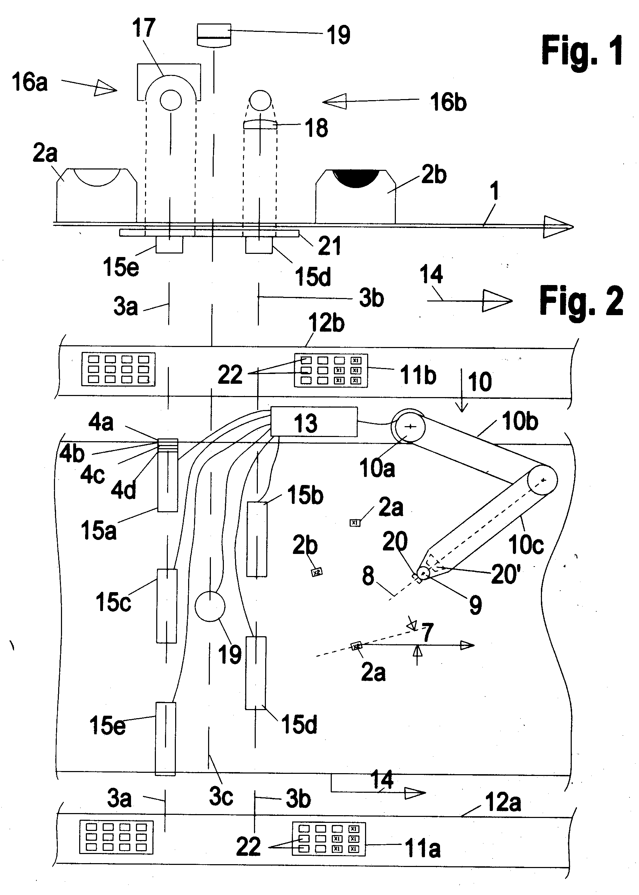

Fig. 1 zeigt ein Transportband 1, welches in Bewegungsrichtung 14 bewegt wird, und auf welchem die Produkte 2a, 2b, ... unregelmäßig verteilt aufliegen und von dem Transportband 1 mitbewegt werden.

Wie am besten in Fig. 2 zu erkennen, müssen diese Produkte 2a, 2b vom Transportband 1 in entsprechende, neben dem Transportband angelieferte Trays 11a, 11b und die darin vorgesehenen Nester, also meist speziell geformte Vertiefungen, eingesetzt werden. Dabei werden die Trays 11a, 11b vorzugsweise auf Traybändern 12a, 12b herantransportiert und weiterbewegt.

Das Umsetzen geschieht dabei mittels eines z. B. zweiarmigen Greifroboters 10, dessen Basis 10a fest neben dem Band montiert ist, und demgegenüber ein Oberarm 10b wenigstens um eine vertikale Achse verschwenkbar ist, wobei gleiches für den Unterarm 10c gegenüber dem Oberarm 10b gilt.

Am vorderen Ende des Unterarmes 10c ist eine Greifeinrichtung 9, häufig ein Vakuumsauger, angeordnet, welcher zusätzlich ggf. um seine Hochachse drehbar sein kann.

Die Greifeinrichtung 9 muß auf dem sich bewegenden Transportband 1 auf eine bestimmte Position zugreifen, die ihr vorher von einem Rechner 13 für einen bestimmten Zeitpunkt vorgegeben wurde. Hierzu muß dem Rechner 13 die Position der einzelnen Produkte 2a, 2b auf dem Transportband 1 zu einem bestimmten Zeitpunkt bekannt sein, und ebenso die Laufgeschwindigkeit des Transportbandes 1.

Zu diesem Zweck wird stromaufwärts des bzw. der Roboter 10 eine optische Positionsbestimmung entlang zwei quer zur Bewegungsrichtung 14 des Transportbandes 1 verlaufender Abtastlinien 3a, 3b durchgeführt, welche sich über die gesamte Breite des Transportbandes 1 erstrecken.

Wie besser in Fig. 1 zu erkennen, sind hierfür unterhalb des Transportbandes 1 Stabsensoren 15 angeordnet, die in Richtung der Abtastlinien 3a, 3b liegen und einfallendes Licht von oben, also vom Transportband 1 her, empfangen können. Da es sich hierbei um CCD-Kontaktsensoren handelt, sind die Stabsensoren 15 direkt an der Unterseite einer fest montierten, durchsichtigen Glasplatte 21 montiert, oberhalb welcher in möglichst geringem Abstand das Transportband 1 entlanggleitet.

Auf der anderen Seite des Transportbandes 1, also oberhalb des Transportbandes 1, sind entlang der Abtastlinien 3a, 3b Lichtleisten 16a, 16b angeordnet, die nach unten auf das Transportband 1 strahlen. Da das Transportband 1 zumindest für das von den Lichtleisten 16a, 16b ausgesandte licht wenigstens teilweise durchlässig ist, registrieren die Stabsensoren 15 einen Hell-Dunkel-Wechsel, wenn eines der Produkte 2a, 2b in die Abtastlinie 3a. 3b hineingerät bzw. diese durchläuft. Da die Abtastung in kurzen zeitlichen Abständen im Vergleich zur Bandgeschwindigkeit durchgeführt wird, erfolgt im Verlaufe des Durchwanderns eines z. B. 2 cm im Durchmesser messenden Produktes 2a eine mehrfache Messung und mehrfache Registrierung, so daß - bei unrunden Produkten 2 - sogar deren Drehlage ermittelt werden kann.

Um die Positionen möglichst exakt ermitteln zu können, ist ein Einfall des Lichts von den Lichtleisten 16a, 16b in möglichst parallelen Lichtstrahlen, also z. B. senkrecht von oben auf das Transportband 1, wünschenswert. Zu diesem Zweck wird das Licht der Lichtleisten entweder mittels eines entsprechend konkav geformten, hinter der Lichtleiste 16a liegenden Reflektor 17 gebündelt, oder mittels einer in Strahlungsrichtung vor der Lichtleiste 16b liegenden Linse 18, die die Lichtstrahlen parallel ausrichtet.

Die Abtastung entlang von zwei Abtastlinien 3a, 3b ist deshalb notwendig, weil als Stabsensoren 15a - 15e CCD-Kontaktsensoren verwendet werden, die in großer Stückzahl und daher kostengünstig in handelsüblichen Scannern für die Bild- und Textarchivierung Verwendung finden.

Diese Stabsensoren besitzen eine Länge von 20-30 cm, und es müssen daher mehrere Stabsensoren verwendet werden, um die gesamte Breite des Transportbandes 1 abzudecken.

Wie in Fig. 2 zu erkennen, werden daher die Stabsensoren 15a, 15c, 15e entlang der einen Abtastlinie 3a mit solchen Lücken zwischen sich angeordnet, daß diese Lücken gerade etwas kürzer sind als die Länge eines Stabsensors. Dadurch können durch Anordnung der Stabsensoren 15b und 15d gerade in diesen Lücken auf der anderen Abtastlinie 3b eine lückenlose Abtastung der gesamten Breite des Transportbandes 1 erzielt werden. Natürlich müssen über einen entsprechenden Rechner, der mit allen Stabsensoren 15a - 15e verbunden ist, die Stabsensoren einer Abtastlinie 3a oder 3b zeitgleich aktiviert werden, und der räumliche Versatz der einzelnen Stabsensoren zueinander muß durch den Rechner 13 ebenfalls berücksichtigt werden.
Innerhalb der Stabsensoren 15 sind einzelne lichtempfindliche Sensoren 4a, 4b, ..., in der Regel CCD-Sensoren, nur in Längsrichtung der Stabsensoren 15, also in Querrichtung des Transportbandes 1, aneinander gereiht.

Dadurch, daß das Licht von den Lichtleisten 16a, 16b in möglichst parallelen Strahlen in Richtung der lichtempfindlichen Sensoren 4a, 4b, ..., also der Stabsensoren 15, abgestrahlt wird, und diese lichtempfindlichen Sensoren 4a, 4b, ... auch räumlich entlang im wesentlichen der gesamten Breite des Transportbandes 1 angeordnet sind, treten keine optischen Verzerrungen und Parallaxen bei der optischen Signalverarbeitung auf. Damit können Produkte 2 mit unterschiedlicher Gestalt, unabhängig von deren Höhe und seitlichen Vorsprüngen, bis auf einen sehr geringen Abstand zueinander noch als separate Produkte auf dem Transportband 1 unterschieden werden. Zusätzlich ist der Aufwand für Neujustierung beim Austausch eines Stabsensors 15 relativ gering, und insbesondere kann auf aufwendige Eichungsläufe verzichtet werden.

Mit derartigen CCD-Kontaktsensoren ist eine Erkennung mit einer Auflösung von ca. 0,1 mm noch mit begrenztem finanziellen Aufwand durchführbar, Insbesondere wenn solche CCD-Sensoren verwendet werden, die lediglich Hell-Dunkel-Unterschiede registrieren können, also keine Farberkennung durchführen.

In vielen Fällen ist jedoch zusätzlich eine Farberkennung zumindest der Gestaltung auf der Oberseite der Produkte 2 notwendig.

In Fig. 2 ist - abweichend von der Fig. 1 - die oberhalb des Transportbandes 1 angeordneten Lichtleisten 16a, 16b mit Reflektor bzw. Linse zur Vereinfachung nicht dargestellt, sondern lediglich die unter dem Transportband 1 angeordneten Stabsensoren 15.

Für die Farberkennung ist jedoch in der Regel auch eine wesentlich geringere Auflösung ausreichend als für die exakte Positionsbestimmung eines Produktes. Die Farberkennung kann daher auf zwei verschiedene Art und Weisen zusätzlich zu der lediglich die exakte Positionierung durchführenden CCD-Sensoren erreicht werden:

In Fig. 2 ist im Bereich der Abtastlinien 3a, 3b eine zusätzliche Zeilenkamera 19 dargestellt, welche wie üblich etwa über der Mitte des Transportbandes 1 hängt und entlang einer weiteren Abtastlinie 3c die gesamte Breite des Transportbandes 1 abtastet. Diese Zeilenkamera 19 dient jedoch lediglich der Farberkennung, muß daher also eine wesentlich geringere Auflösung besitzen als bei der früheren Verwendung zur Positionsbestimmung. Diese Zeilenkamera 19 kann auch anstelle zwischen den beiden Abtastlinien 3a, 3b für die Stabsensoren stromabwärts nach den beiden Abtastlinien für die Positionsbestimmung angeordnet werden, und könnte daher vom ebenfalls damit verbundenen Rechner 13 eine zusätzliche grobe Vorabinformation über die Position der Produkte erhalten, deren Oberflächenfarbe ermittelt werden soll.

Die Farberkennung ist vor allem deshalb notwendig, weil durch die unterschiedliche Farbe auf der Oberfläche gemischt angelieferte unterschiedliche Produkte 2a, 2b unterschieden werden können, die identische Grundfläche besitzen und daher durch die Hell-Dunkel-Abtastung des Umfanges mittels der CCD-Sensoren von der Unterseite her nicht möglich wäre.

Eine andere Möglichkeit besteht darin - wie in Fig. 2 eingezeichnet - an den Roboter 10 im Bereich dessen freien Endes, also möglichst unmittelbar am der Greifeinrichtung 9 oder am vorderen Ende dessen Unterarmes 10c eine Kamera 20 bzw. 20' anzuordnen. Aufgrund der gegenüber dem der Greifeinrichtung 9 bzw. dem Unterarm 10c bekannten Blickrichtung dieser Kamera 20 bzw. 20' und der bekannten momentanen Ausrichtung des Armes des Greifroboters 10 und auch dessen Greifeinrichtung 9 ist die absolute Blickrichtung der Kamera 20 bzw. 20' jederzeit bekannt. Der Vorteil dieser Lösung liegt darin, daß hierbei eine Kamera mit begrenztem Gesichtsfeld und damit auch geringer Auflösung verwendet werden kann, da es ausreicht, wenn eine Erkennung der Oberflächengestaltung des Produktes z. B. 2a erst dann erfolgt, wenn die Kamera ziemlich nah an das Produkt angenähert ist, was also kurz vor dem Greifen des Produktes durch die Greifeinrichtung 9 der Fall ist. Dabei wird dann mit Hilfe der Kamera 20 die Farbe und/oder die Drehlage der Oberflächengestaltung des Produktes und damit des Produktes selbst relativ zu den Raumachsen erkannt. Da diese Kamera 20 bzw. 20' ebenfalls mit dem Rechner 13 in Verbindung steht, kann dadurch der Greifeinrichtung 9 mitgeteilt werden, um welchen Winkelbetrag um eine Hochachse das Produkt nach dem Aufnehmen und vor dem Ablegen im Tray z. B. 11a gedreht werden muß, um z. B. viereckige Produkte so im Tray 11a abzulegen, daß die Beschriftung auf der Oberseite immer in die gleiche Richtung weist.

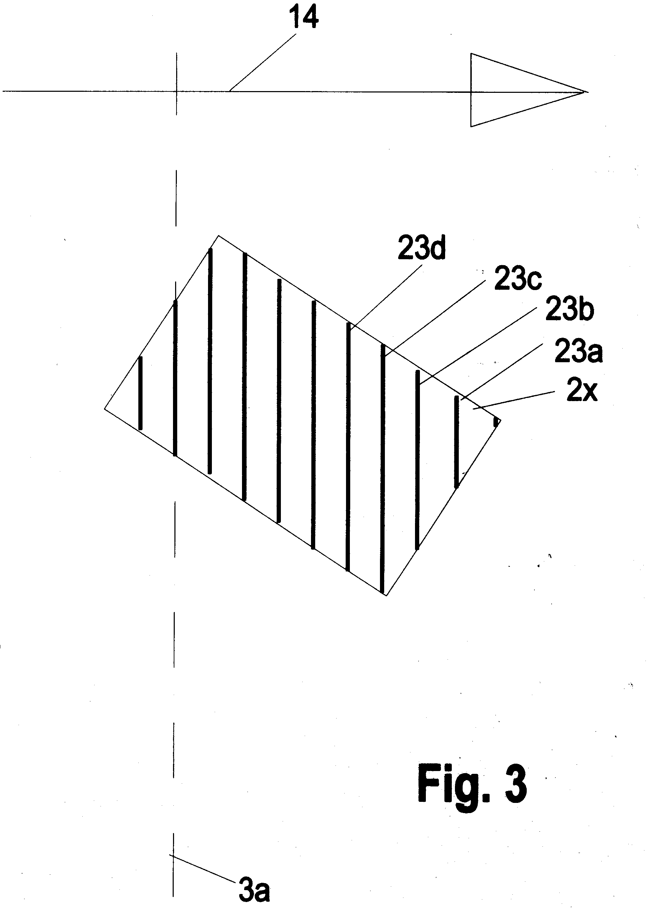

Fig. 3 zeigt das Ergebnis beim Durchlauf eines in der Grundfläche rechteckigen Produktes 2x durch die Abtastlinie 3a.

Der auf der Abtastlinie 3a befindliche Stabsensor wird dabei in bestimmten, insbesondere zeitlichen Abständen aktiviert, und ermittelt entlang der Abtastlinie 3a einen abgeschatteten Bereich, welcher auf der Grundfläche des Produktes 2x als Linie 23a, 23b, 23c, ... eingezeichnet ist.

Unabhängig von der Transportgeschwindigkeit des Transportbandes 1 in Bewegungsrichtung 14 besitzen diese Linien 23 gleichbleibenden Abstand zueinander solange die Zeilengeschwindigkeit der CCD-Sensoren nicht überschritten wird. Die Länge und Position der Linien 23a, 23b, ... ist jedoch unterschiedlich und ergibt in der Zusammenschau betrachtet nicht nur die Position, sondern auch die Drehlage der Grundfläche des Produktes 2x, sofern es sich um ein stark unrundes, z. B. ein viereckiges Produkt handelt. Bei einem rechteckigen Produkt sind jedoch immer noch zwei Möglichkeiten der tatsächlichen Positionierung gegeben, falls die Oberseite des Produktes keine zur Symmetrielinie symmetrische Gestaltung aufweist, wie etwa eine nur von einer Seite zu lesende Beschriftung, wie mit den Aufschriften x1, x2 in der Fig. 2 verdeutlicht.

Bei ausreichend großer Auflösung und ausreichend häufiger Aktivierung der lichtempfindlichen Sensoren im Vergleich zur Bewegungsgeschwindigkeit des Produktes kann also auf diese Art und Weise nicht nur eine Lagebestimmung des Produktes auf dem Transportband 1, sondern auch eine Bestimmung dessen Drehlage durchgeführt werden.

### BEZUGSZEICHENLISTE

- 1: Transportband
- 2: Produkte
- 3a, 3b: Abtastlinie
- 4a, 4b, ...: lichtempfindliche Sensoren
- 5a, 5b: Lichtleiste
- 6a, 6b: Reflektor
- 7: Winkel
- 8: Richtung
- 9: Greifeinrichtung
- 10: Greifroboter
- 10a: Basis
- 10b: Unterarm
- 10c: Oberarm
- 11a, 11b: Tray
- 12a, 12b: Trayband
- 13: Rechner
- 14: Bewegungsrichtung
- 15a, 15b: Stabsensoren
- 16a, 16b: Lichtleiste
- 17: Reflektor
- 18: Linse
- 19: Zeilenkamera
- 20, 20': Kamera
- 21: Glasplatte
- 22: Nest
- 23: Linie

## Patentansprüche

1. Vorrichtung zur optischen Positionsbestimmung mittels lichtempfindlicher Sensoren (4a, 4b, ...) von Produkten (2) auf einem relativ hierzu bewegten Untergrund, insbesondere einem Transportband (1),
**dadurch gekennzeichnet, daß**
- entlang wenigstens einer Abtastlinie (3a, 3b), die quer zur Bewegungsrichtung (14) verläuft, wenigstens eine auf das Transportband (1) strahlende Lichtquelle angeordnet ist, und
- wenigstens eine entlang wenigstens einer der Abtastlinien (3a, 3b) angeordnete Reihe von lichtempfindlichen Sensoren (4a, 4b) zur Registrierung des durch die zwischen Lichtquelle und den lichtempfindlichen Sensoren (4a, 4b) hindurch wandernden Produkte (2) bedingten Lichteffektes angeordnet ist.

2. Vorrichtung nach Anspruch 1,
**dadurch gekennzeichnet, daß**
- die lichtempfindlichen Sensoren (4a, 4b) auf der von der Lichtquelle abgewandten Seite des Transportbandes angeordnet sind und den Schattenwurf der Produkte (2) registrieren, und
- das Transportband (1) lichtdurchlässig ist.

3. Vorrichtung nach einem der vorhergehenden Ansprüche,
**dadurch gekennzeichnet, daß**
die Lichtquelle auf der Seite des Transportbandes (1) angeordnet ist, welche die Produkte (2) trägt und die lichtempfindlichen Sensoren (4a, 4b) auf der gegenüberliegenden Seite unmittelbar am Transportband (1) angeordnet sind.

4. Vorrichtung nach einem der vorhergehenden Ansprüche,
**dadurch gekennzeichnet, daß**
die lichtempfindlichen Sensoren (4a, 4b) in Form von Stabsensoren (15a, 15b) zusammengefaßt sind.

5. Vorrichtung nach einem der vorhergehenden Ansprüche,
**dadurch gekennzeichnet, daß**
die lichtempfindlichen Sensoren (4a, 4b) eine möglichst geringe Erstreckung in Bewegungsrichtung (14) aufweisen und in den Stabsensoren (15a, 15b) lichtempfindliche Sensoren (4a, 4b) nur in Richtung der Abtastlinien (3a, 3b), also quer zur Bewegungsrichtung (14), aneinandergereiht sind.

6. Vorrichtung nach einem der vorhergehenden Ansprüche,
**dadurch gekennzeichnet, daß**
als lichtempfindliche Sensoren (4a, 4b) bzw. als Stabsensoren (15a, 15b) CCD-Sensoren verwendet werden.

7. Vorrichtung nach Anspruch 6,
**dadurch gekennzeichnet, daß**
als Stabsensoren (15a, 15b) die stabförmigen CCD-Sensoren aus herkömmlichen Scannern insbesondere, CCD-Kontaktsensoren, verwendet werden.

8. Vorrichtung nach einem der vorhergehenden Ansprüche,
**dadurch gekennzeichnet, daß**
die Stabsensoren (15a, 15b) entlang zweier parallel verlaufender, in Bewegungsrichtung (14) beabstandeter, Abtastlinien (3a, 3b) so angeordnet sind, daß die auf der einen Abtastlinie (3a) zwischen zwei hintereinander folgenden Stabsensoren (15a, 15c, 15e) in Querrichtung gebildeten Lücken durch die entlang der anderen Abtastlinie (3b) angeordneten Stabsensoren (15b, 15d) abgedeckt sind.

9. Vorrichtung nach einem der vorhergehenden Ansprüche,
**dadurch gekennzeichnet, daß**
als Lichtquellen entlang jeder Abtastlinie (3a, 3b) eine Lichtleiste (16a, 16b) im Abstand zum Transportband (1) angeordnet ist.

10. Vorrichtung nach Anspruch 9,
**dadurch gekennzeichnet, daß**
die Lichtleiste (16a, 16b) mittels optischer Mittel, insbesondere eines entsprechend geformten Reflektors (17) oder einer Linse (18), möglichst parallel gebündeltes, lotrecht gegen das Transportband (1) gerichtetes Licht abstrahlt.

11. Vorrichtung nach einem der vorhergehenden Ansprüche,
**dadurch gekennzeichnet, daß**
die lichtempfindlichen Sensoren (4a, 4b) und die Stabsensoren (15a, 15b) mit einem Rechner (13) zum Errechnen der Position der Produkte (2) auf dem Transportband (1) und ggf. deren Drehlage relativ zur Bewegungsrichtung (14) verbunden sind.

12. Vorrichtung nach Anspruch 11,
**dadurch gekennzeichnet, daß**
eine Greifeinrichtung (9) zum Ergreifen der Produkte (2) auf dem Transportband (1) mit dem Rechner (13) verbunden ist.

13. Vorrichtung nach einem der vorhergehenden Ansprüche,
**dadurch gekennzeichnet, daß**
entlang einer weiteren Abtastlinie (3c), welche insbesondere zwischen den Abtastlinien (3a, 3b) angeordnet ist, mittels wenigstens einer farbempfindlichen Zeilenkamera (19), welche im Abstand zum Transportband (1) angeordnet ist, eine Farberkennung der Oberfläche der unter der Abtastlinie (3c) hin durchwandernden Produkte (2a, 2b) durchgeführt wird.

14. Vorrichtung nach einem der vorhergehenden Ansprüche,
**dadurch gekennzeichnet, daß**
an einer relativ zum Transportband beweglichen Greifeinrichtung (9) eine farbempfindliche Kamera (20, 20') angeordnet ist, deren Blickrichtung relativ zur Greifeinrichtung (9) bzw. dem sie tragenden Bauteil bekannt ist, und welche ebenfalls mit dem Rechner (13) verbunden ist.

15. Verfahren zur optischen Positionsbestimmung mit lichtempfindlichen Sensoren von Produkten auf einem relativ hierzu bewegten Untergrund, insbesondere einem Transportband (1),
**dadurch gekennzeichnet, daß**
das Transportband (1) auf wenigstens einer Abtastlinie (3a, 3b), die quer zu der Bewegungsrichtung (14) verläuft, vom Licht bestrahlt und von entlang der ganzen Abtastlinie (3a, 3b) angeordneten lichtempfindlichen Sensoren (4a, 4b) der Lichteffekte der Produkte (2) registriert wird.

16. Verfahren nach Anspruch 14,
**dadurch gekennzeichnet, daß**
entlang wenigstens einer Abtastlinie (3a, 3b), die quer zu der Bewegungsrichtung (14) verläuft, eine Farberkennung der Oberseite der Produkte (2) durchgeführt wird.

17. Verfahren nach Anspruch 14,
**dadurch gekennzeichnet, daß**
eine kleinflächige Farberkennung der Oberseite der Produkte (2) durchgeführt wird beim Annähern einer Greifeinrichtung (9) an das Produkt (2) mittels der Greifeinrichtung selbst.
